(19) Europäisches Patentamt European Patent Office Office européen des brevets

(11) **EP 4 362 007 B1**

(12) **EUROPEAN PATENT SPECIFICATION**

(45) Date of publication and mention
of the grant of the patent:
**04.02.2026 Bulletin 2026/06**

(21) Application number: **23192655.1**

(22) Date of filing: **22.08.2023**

(51) International Patent Classification (IPC):
**G10H 1/36** *(2006.01)*     **H04N 21/81** *(2011.01)*
**G10L 25/30** *(2013.01)*     **G10L 15/16** *(2006.01)*

(52) Cooperative Patent Classification (CPC):
**G10H 1/368; G06F 40/30; H04N 21/43074;**
**H04N 21/4622; H04N 21/4666; H04N 21/8113;**
G10H 1/361; G10H 2220/011; G10H 2240/131;
G10H 2240/325; G10H 2250/235; G10H 2250/311;
G10L 25/30

(54) **SYSTEMS AND METHODS FOR LYRICS ALIGNMENT**

SYSTEME UND VERFAHREN ZUR AUSRICHTUNG VON LIEDTEXTEN

SYSTÈMES ET PROCÉDÉS D'ALIGNEMENT DES PAROLES AVEC LA CHANSON.

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **24.10.2022 US 202263418935 P**
**26.06.2023 US 202318341550**

(43) Date of publication of application:
**01.05.2024 Bulletin 2024/18**

(73) Proprietor: **Spotify AB**
**111 53 Stockholm (SE)**

(72) Inventors:
• **DURAND, Simon**
**111 53 Stockholm (SE)**
• **STOLLER, Daniel**
**111 53 Stockholm (SE)**

(74) Representative: **Kransell & Wennborg KB**
P.O. Box 27834
**115 93 Stockholm (SE)**

(56) References cited:
**CN-A- 109 102 800**    **US-A1- 2008 097 754**

• **SCHULZE-FORSTER KILIAN ET AL: "Phoneme**
**Level Lyrics Alignment and Text-Informed**
**Singing Voice Separation",**
**ARXIV:1806.04885V2,, vol. 29, 23 June 2021**
**(2021-06-23), pages 2382 - 2395, XP011870177,**
**DOI: 10.1109/TASLP.2021.3091817**

## Description

TECHNICAL FIELD

The disclosed embodiments relate generally to media provider systems including, but not limited to, systems and methods for aligning audio with lyrics (e.g., textual lyrics).

BACKGROUND

Lyrics alignment is the process of aligning the lyrics of a song to an audio signal of the song (e.g., producing timestamps for each lyrical unit or symbol that reference the position in the audio signal where the respective lyrical unit or symbol is sung). Lyrics alignment is a distinct problem from automatic transcription of lyrics. Existing methods of lyrics alignment are inefficient for large vocabularies and different languages. US 2008/097754 A1 defines an automated temporal alignment between lyrics and a music audio signal including vocals and accompaniment sounds, for instance in a karaoke equipment.

SUMMARY

As described herein, a system is provided for accurately and automatically aligning audio and lyrics. While other systems used for lyrics alignment are built on speech recognition and/or transcription methods, these prior systems are complex and lack accuracy. For example, prior systems treat each lyrical unit in the vocabulary as a separate entity, and directly try to estimate a probability for each unit. With larger vocabulary sizes, this approach becomes computationally expensive and impedes training. For example, especially in the multi-language setting, a large number of different characters are encountered as languages often use completely separate alphabets, which results in a large vocabulary size. Further issues arise when a lyrical unit is defined to be more than a single character (e.g., a subword or whole word). This is desirable as the acoustics in the audio often relate more directly to these subword or word units as opposed to individual characters, which for example can be completely silent depending on context.

This issue could be solved by using a phoneme representation, by first converting the text to phonemes with a conversion tool. However, these tools cannot be trained jointly with the alignment model, so errors in the mapping propagate through the rest of the system. Furthermore, these systems usually offer only one pronunciation variant for each input text, which can limit performance as the system cannot successfully align parts with alternative pronunciations (e.g. due to accents). They are also not available for all languages and construction is time-intensive as it is mostly manual.

Some previous lyric alignment approaches are effectively lyric transcription approaches that extract lyrics from audio (possibly with timing information), on top of which a decoding scheme is added for subsequent alignment with received lyrics text. This type of approach increases system complexity and inefficiency, as the model is trained to solve a more difficult task than needed. For example, the lyrics text is treated as the target, not as an input, which prevents these models from learning a useful and flexible representation of the input text.

As such, a model that is designed to overcome the shortcomings of previous lyric alignment approaches is provided. The model described herein is both simpler to train than previous solutions and is specifically tailored for the application of lyrics alignment.

In some embodiments, a model is trained to generate two sets of embeddings. A first set of embeddings is produced by an audio encoder that receives, as an input, frames of an audio signal or a representation (e.g., spectrogram) of the frames (e.g., in which each frame is a time slice of the audio signal). An embedding (also referred to as encoding) of the first set of embeddings is generated for an individual frame. The second set of embeddings is produced by a text encoder that receives, as an input, symbols that appear in the lyrics text (e.g., the lyrics are tokenized to generate the symbols). In some embodiments, the model is trained using contrastive learning such that lyrical symbols produce embeddings that are similar to corresponding audio frames, and dissimilar to other audio frames. In some embodiments, the systems and methods described herein compare the two sets of embeddings and determine respective similarities between the respective embeddings for audio signals and the respective embeddings for symbols. The systems and methods then identify the path of highest overall similarities and align the lyrics text to the audio in accordance with the path of highest overall similarities.

The invention is as defined by the appended claims.

In accordance with some embodiments, a computer system is provided. The computer system includes one or more processors and memory storing one or more programs. The one or more programs include instructions for performing any of the methods described herein.

In accordance with some embodiments, a non-transitory computer-readable storage medium is provided. The non-transitory computer-readable storage medium stores one or more programs for execution by a computer system with one or more processors. The one or more programs comprising instructions for performing any of the methods described herein.

Thus, systems are provided with improved methods for aligning lyrics text.

BRIEF DESCRIPTION OF THE DRAWINGS

The embodiments disclosed herein are illustrated by way of example, and not by way of limitation, in the figures of the accompanying drawings. Like reference numerals refer to corresponding parts throughout the drawings and specification.

FIG. 1 is a block diagram illustrating a media content delivery system, in accordance with some embodiments.

FIG. 2 is a block diagram illustrating an electronic device, in accordance with some embodiments.

FIG. 3 is a block diagram illustrating a media content server, in accordance with some embodiments.

FIG. 4 is a block diagram illustrating training an audio encoder and a text encoder, in accordance with some embodiments.

FIG. 5 is a block diagram illustrating line-by-line lyrics alignment, in accordance with some embodiments.

FIGS. 6A-6C are flow diagrams illustrating a method of generating embeddings to align lyrics text, in accordance with some embodiments.

DETAILED DESCRIPTION

Reference will now be made to embodiments, examples of which are illustrated in the accompanying drawings. In the following description, numerous specific details are set forth in order to provide an understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

It will also be understood that, although the terms first, second, etc. are, in some instances, used herein to describe various elements, these elements should not be limited by these terms. These terms are used only to distinguish one element from another. For example, a first electronic device could be termed a second electronic device, and, similarly, a second electronic device could be termed a first electronic device, without departing from the scope of the various described embodiments. The first electronic device and the second electronic device are both electronic devices, but they are not the same electronic device.

The terminology used in the description of the various embodiments described herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" is, optionally, construed to mean "when" or "upon" or "in response to determining" or "in response to detecting" or "in accordance with a determination that," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]" or "in accordance with a determination that [a stated condition or event] is detected," depending on the context.

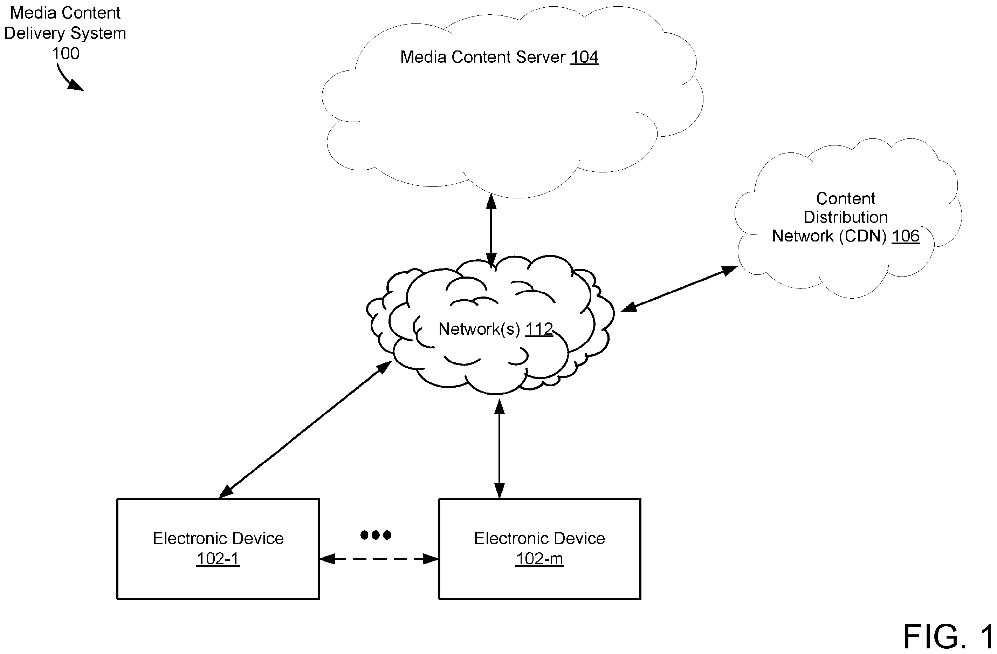

FIG. 1 is a block diagram illustrating a media content delivery system 100, in accordance with some embodiments. The media content delivery system 100 includes one or more electronic devices 102 (e.g., electronic device 102-1 to electronic device 102-m, where m is an integer greater than one), one or more media content servers 104, and/or one or more content distribution networks (CDNs) 106. The one or more media content servers 104 are associated with (e.g., at least partially compose) a media-providing service. The one or more CDNs 106 store and/or provide one or more content items (e.g., to electronic devices 102). In some embodiments, the CDNs 106 are included in the media content servers 104. One or more networks 112 communicably couple the components of the media content delivery system 100. In some embodiments, the one or more networks 112 include public communication networks, private communication networks, or a combination of both public and private communication networks. For example, the one or more networks 112 can be any network (or combination of networks) such as the Internet, other wide area networks (WAN), local area networks (LAN), virtual private networks (VPN), metropolitan area networks (MAN), peer-to-peer networks, and/or ad-hoc connections.

In some embodiments, an electronic device 102 is associated with one or more users. In some embodiments, an electronic device 102 is a personal computer, mobile electronic device, wearable computing device, laptop computer, tablet computer, mobile phone, feature phone, smart phone, an infotainment system, digital media player, a speaker, television (TV), and/or any other electronic device capable of presenting media content (e.g., controlling playback of media items, such as music tracks, podcasts, videos, etc.). Electronic devices 102 may connect to each other wirelessly and/or through a wired connection (e.g., directly through an interface, such as an HDMI interface). In some embodiments, electronic devices 102-1 and 102-m are the same type of device (e.g., electronic device 102-1 and electronic device 102-m are both speakers). Alternatively, electronic device 102-1 and electronic device 102-m include two or more different types of devices.

In some embodiments, electronic devices 102-1 and 102-m send and receive media-control information through network(s) 112. For example, electronic devices 102-1 and 102-m send media control requests (e.g., requests to play music, podcasts, movies, videos, or other media items, or playlists thereof) to media content server 104 through network(s) 112. Additionally, electronic devices 102-1 and 102-m, in some embodiments, also send indications of media content items to media content server 104 through network(s) 112. In some embodiments, the media content items are uploaded to electronic devices 102-1 and 102-m before the electronic devices forward the media content items to media content server 104.

In some embodiments, electronic device 102-1 communicates directly with electronic device 102-m (e.g., as illustrated by the dotted-line arrow), or any other electronic device 102. As illustrated in FIG. 1, electronic device 102-1 is able to communicate directly (e.g., through a wired connection and/or through a short-range wireless signal, such as those associated with personal-area-network (e.g., BLUETOOTH / BLE) communication technologies, radio-frequency-based near-field communication technologies, infrared communication technologies, etc.) with electronic device 102-m. In some embodiments, electronic device 102-1 communicates with electronic device 102-m through network(s) 112. In some embodiments, electronic device 102-1 uses the direct connection with electronic device 102-m to stream content (e.g., data for media items) for playback on the electronic device 102-m.

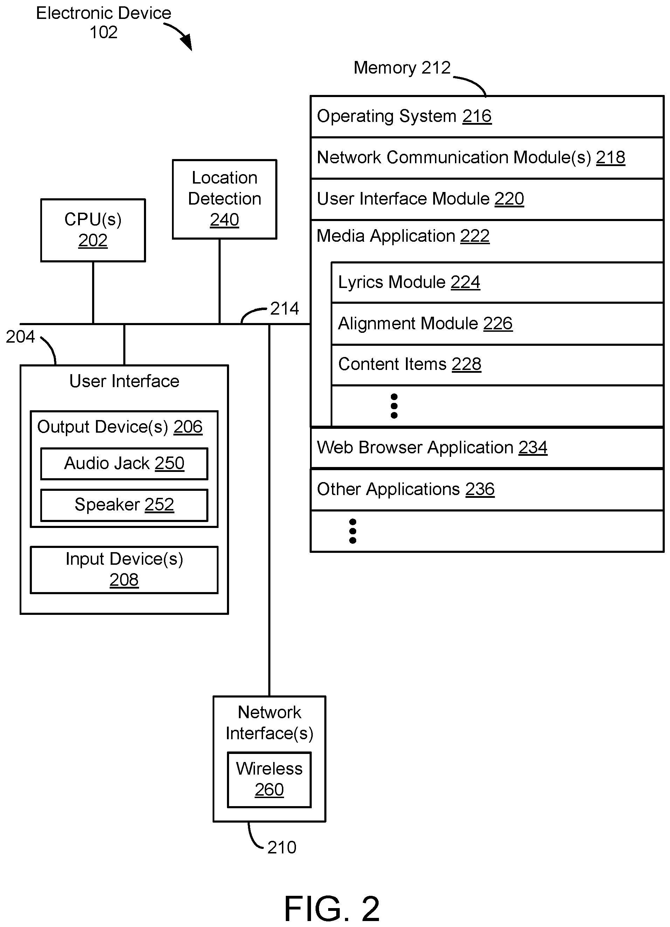

In some embodiments, electronic device 102-1 and/or electronic device 102-m include a media application 222 (FIG. 2) that allows a respective user of the respective electronic device to upload (e.g., to media content server 104), browse, request (e.g., for playback at the electronic device 102), and/or present media content (e.g., control playback of music tracks, playlists, videos, etc.). In some embodiments, one or more media content items are stored locally by an electronic device 102 (e.g., in memory 212 of the electronic device 102, FIG. 2). In some embodiments, one or more media content items are received by an electronic device 102 in a data stream (e.g., from the CDN 106 and/or from the media content server 104). The electronic device(s) 102 are capable of receiving media content (e.g., from the CDN 106) and presenting the received media content. For example, electronic device 102-1 may be a component of a network-connected audio/video system (e.g., a home entertainment system, a radio/alarm clock with a digital display, or an infotainment system of a vehicle). In some embodiments, the CDN 106 sends media content to the electronic device(s) 102.

In some embodiments, the CDN 106 stores and provides media content (e.g., media content requested by the media application 222 of electronic device 102) to electronic device 102 via the network(s) 112. Content (also referred to herein as "media items," "media content items," and "content items") is received, stored, and/or served by the CDN 106. In some embodiments, content includes audio (e.g., music, spoken word, podcasts, audiobooks, etc.), video (e.g., short-form videos, music videos, television shows, movies, clips, previews, etc.), text (e.g., articles, blog posts, emails, etc.), image data (e.g., image files, photographs, drawings, renderings, etc.), games (e.g., 2- or 3-dimensional graphics-based computer games, etc.), or any combination of content types (e.g., web pages that include any combination of the foregoing types of content or other content not explicitly listed). In some embodiments, content includes one or more audio media items (also referred to herein as "audio items," "tracks," and/or "audio tracks").

In some embodiments, media content server 104 receives media requests (e.g., commands) from electronic devices 102. In some embodiments, media content server 104 includes a voice API, a connect API, and/or key service. In some embodiments, media content server 104 validates (e.g., using key service) electronic devices 102 by exchanging one or more keys (e.g., tokens) with electronic device(s) 102.

In some embodiments, media content server 104 and/or CDN 106 stores one or more playlists (e.g., information indicating a set of media content items). For example, a playlist is a set of media content items defined by a user and/or defined by an editor associated with a media-providing service. The description of the media content server 104 as a "server" is intended as a functional description of the devices, systems, processor cores, and/or other components that provide the functionality attributed to the media content server 104. It will be understood that the media content server 104 may be a single server computer, or may be multiple server computers. Moreover, the media content server 104 may be coupled to CDN 106 and/or other servers and/or server systems, or other devices, such as other client devices, databases, content delivery networks (e.g., peer-to-peer networks), network caches, and the like. In some embodiments, the media content server 104 is implemented by multiple computing devices working together to perform the actions of a server system (e.g., cloud computing).

FIG. 2 is a block diagram illustrating an electronic device 102 (e.g., electronic device 102-1 and/or electronic device 102-m, FIG. 1), in accordance with some embodiments. The electronic device 102 includes one or more central processing units (CPU(s), i.e., processors or cores) 202, one or more network (or other communications) interfaces 210, memory 212, and one or more communication buses 214 for interconnecting these components. The communication buses 214 optionally include circuitry (sometimes called a chipset) that interconnects and controls communications between system components.

In some embodiments, the electronic device 102 includes a user interface 204, including output device(s) 206 and/or input device(s) 208. In some embodiments, the input devices 208 include a keyboard, mouse, or track pad. Alternatively, or in addition, in some embodiments, the user interface 204 includes a display device that includes a touch-sensitive surface, in which case the display device is a touch-sensitive display. In electronic devices that have a touch-sensitive display, a physical keyboard is optional (e.g., a soft keyboard may be displayed when keyboard entry is needed). In some embodiments, the output devices (e.g., output device(s) 206) include a speaker 252 (e.g., speakerphone device) and/or an audio jack 250 (or other physical output connection port) for connecting to speakers, earphones, headphones, or other external listening devices. Furthermore, some electronic devices 102 use a microphone and voice recognition device to supplement or replace the keyboard. Optionally, the electronic device 102 includes an audio input device (e.g., a microphone) to capture audio (e.g., speech from a user).

Optionally, the electronic device 102 includes a location-detection device 240, such as a global navigation satellite system (GNSS) (e.g., GPS (global positioning system), GLONASS, Galileo, BeiDou) or other geo-location receiver, and/or location-detection software for determining the location of the electronic device 102 (e.g., module for finding a position of the electronic device 102 using trilateration of measured signal strengths for nearby devices).

In some embodiments, the one or more network interfaces 210 include wireless and/or wired interfaces for receiving data from and/or transmitting data to other electronic devices 102, a media content server 104, a CDN 106, and/or other devices or systems. In some embodiments, data communications are carried out using any of a variety of custom or standard wireless protocols (e.g., NFC, RFID, IEEE 802.15.4, Wi-Fi, Zig-Bee, 6LoWPAN, Thread, Z-Wave, Bluetooth, ISA100.11a, WirelessHART, MiWi, etc.). Furthermore, in some embodiments, data communications are carried out using any of a variety of custom or standard wired protocols (e.g., USB, Firewire, Ethernet, etc.). For example, the one or more network interfaces 210 include a wireless interface 260 for enabling wireless data communications with other electronic devices 102, media presentations systems, and/or or other wireless (e.g., Bluetooth-compatible) devices (e.g., for streaming audio data to the media presentations system of an automobile). Furthermore, in some embodiments, the wireless interface 260 (or a different communications interface of the one or more network interfaces 210) enables data communications with other WLAN-compatible devices (e.g., a media presentations system) and/or the media content server 104 (via the one or more network(s) 112, FIG. 1).

In some embodiments, electronic device 102 includes one or more sensors including, but not limited to, accelerometers, gyroscopes, compasses, magnetometer, light sensors, near field communication transceivers, barometers, humidity sensors, temperature sensors, proximity sensors, range finders, and/or other sensors/devices for sensing and measuring various environmental conditions.

Memory 212 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. Memory 212 may optionally include one or more storage devices remotely located from the CPU(s) 202. Memory 212, or alternately, the non-volatile memory solid-state storage devices within memory 212, includes a non-transitory computer-readable storage medium. In some embodiments, memory 212 or the non-transitory computer-readable storage medium of memory 212 stores the following programs, modules, and data structures, or a subset or superset thereof:

- an operating system 216 that includes procedures for handling various basic system services and for performing hardware-dependent tasks;

- network communication module(s) 218 for connecting the client device 102 to other computing devices (e.g., media presentation system(s), media content server 104, and/or other client devices) via the one or more network interface(s) 210 (wired or wireless) connected to one or more network(s) 112;

- a user interface module 220 that receives commands and/or inputs from a user via the user interface 204 (e.g., from the input devices 208) and provides outputs for playback and/or display on the user interface 204 (e.g., the output devices 206);

- a media application 222 (e.g., an application for accessing a media-providing service of a media content provider associated with media content server 104) for uploading, browsing, receiving, processing, presenting, and/or requesting playback of media (e.g., media items). In some embodiments, media application 222 includes a media player, a streaming media application, and/or any other appropriate application or component of an application. In some embodiments, media application 222 is used to monitor, store, and/or transmit (e.g., to media content server 104) data associated with user behavior. In some embodiments, media application 222 also includes the following modules (or sets of instructions), or a subset or superset thereof:

    ○ a lyrics module 224 for storing and/or displaying lyrics of media items selected by the user;

    ○ an alignment module 226 for aligning lyrics with the audio of a media item and/or receiving cues of aligned lyrics, as received from server 104;

◦ a content items module 228 for storing media items, including audio items such as podcasts and songs, for playback and/or for forwarding requests for media content items to the media content server;

• a web browser application 234 for accessing, viewing, and interacting with web sites; and

• other applications 236, such as applications for word processing, calendaring, mapping, weather, stocks, time keeping, virtual digital assistant, presenting, number crunching (spreadsheets), drawing, instant messaging, e-mail, telephony, video conferencing, photo management, video management, a digital music player, a digital video player, 2D gaming, 3D (e.g., virtual reality) gaming, electronic book reader, and/or workout support.

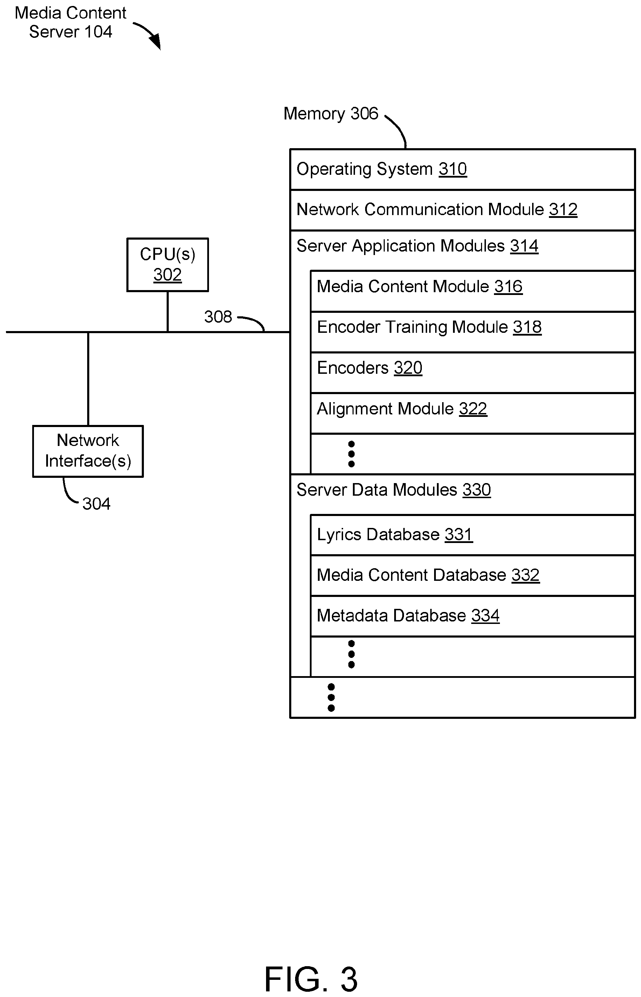

FIG. 3 is a block diagram illustrating a media content server 104, in accordance with some embodiments. The media content server 104 typically includes one or more central processing units/cores (CPUs) 302, one or more network interfaces 304, memory 306, and one or more communication buses 308 for interconnecting these components.

Memory 306 includes high-speed random access memory, such as DRAM, SRAM, DDR RAM, or other random access solid-state memory devices; and may include non-volatile memory, such as one or more magnetic disk storage devices, optical disk storage devices, flash memory devices, or other non-volatile solid-state storage devices. Memory 306 optionally includes one or more storage devices remotely located from one or more CPUs 302. Memory 306, or, alternatively, the non-volatile solid-state memory device(s) within memory 306, includes a non-transitory computer-readable storage medium. In some embodiments, memory 306, or the non-transitory computer-readable storage medium of memory 306, stores the following programs, modules and data structures, or a subset or superset thereof:

• an operating system 310 that includes procedures for handling various basic system services and for performing hardware-dependent tasks;

• a network communication module 312 that is used for connecting the media content server 104 to other computing devices via one or more network interfaces 304 (wired or wireless) connected to one or more networks 112;

• one or more server application modules 314 for performing various functions with respect to providing and managing a content service, the server application modules 314 including, but not limited to, one or more of:

◦ a media content module 316 for storing one or more media content items and/or sending (e.g., streaming), to the electronic device, one or more requested media content item(s);

◦ an encoder training module 318 for training two or more encoders, such as a text encoder and an audio encoder;

◦ encoders 320 for generating representations of a media item, including an audio representation and a text representation;

◦ alignment module 322 for aligning text (e.g., lyrics) with audio based on the audio and text representations generated by encoders 320;

• one or more server data module(s) 330 for handling the storage of and/or access to media items and/or metadata relating to the media items; in some embodiments, the one or more server data module(s) 330 include:

◦ a lyrics database 331 for storing lyrics of media items;

◦ a media content database 332 for storing media items; and

◦ a metadata database 334 for storing metadata relating to the media items, including a genre associated with the respective media items.

In some embodiments, the media content server 104 includes web or Hypertext Transfer Protocol (HTTP) servers, File Transfer Protocol (FTP) servers, as well as web pages and applications implemented using Common Gateway Interface (CGI) script, PHP Hyper-text Preprocessor (PHP), Active Server Pages (ASP), Hyper Text Markup Language (HTML), Extensible Markup Language (XML), Java, JavaScript, Asynchronous JavaScript and XML (AJAX), XHP, Javelin, Wireless Universal Resource File (WURFL), and the like.

Each of the above identified modules stored in memory 212 and 306 corresponds to a set of instructions for performing a function described herein. The above identified modules or programs (i.e., sets of instructions) need not be implemented as separate software programs, procedures, or modules, and thus various subsets of these modules may be combined or otherwise rearranged in various embodiments. In some embodiments, memory 212 and 306 optionally store a subset or superset of the respective modules and data structures identified above. Furthermore, memory 212 and 306 optionally store additional modules and data structures not described above.

Although FIG. 3 illustrates the media content server 104 in accordance with some embodiments, FIG. 3 is intended more as a functional description of the various features that may be present in one or more media content servers than as a structural schematic of the embodiments described herein. In practice, and as recognized by those of ordinary skill in the art, items shown separately could be combined and some items could be separated. For example, some items shown separately in FIG. 3 could be implemented on single servers and single items could be implemented by one or more servers. In some embodiments, media content database 332 and/or metadata database 334 are stored on devices (e.g., CDN 106) that are accessed by media content server 104. The actual number of servers used to implement the media content server 104, and how features are allocated among them, will vary from one implementation to another and, optionally, depends in part on the amount of data traffic that the server system handles during peak usage periods as well as during average usage periods.

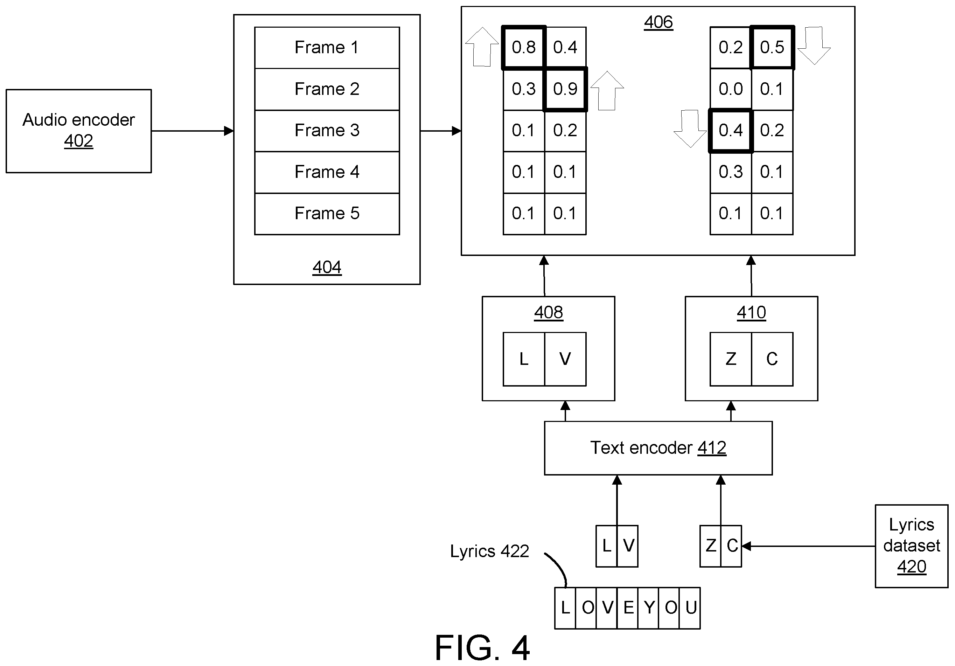

FIG. 4 is a block diagram illustrating training an audio encoder and a text encoder using contrastive learning, in accordance with some embodiments. In some embodiments, the audio encoder and the text encoder are trained to produce embeddings in the same vector space, as described in greater detail below.

In some embodiments, audio encoder 402 receives audio of a media item. In some embodiments, audio encoder 402 optionally receives additional information about the media item. For example, audio encoder 402 optionally receives an indication of one or more languages of the media item. In some embodiments, audio encoder 402 optionally receives additional indications related to the media item, for example, a music genre, a singer identifier, a vocal style, or other information. In some embodiments, the audio encoder 402 receives features $\mathbf{A} \in \mathbf{R}^{T \times D}$ that represent the audio content with D-dimensional feature vectors over time bins (also called frames) $t \in \{1, T\}$. For example, a spectrogram representation of the audio item may be used as an input to audio encoder 402. In some embodiments, the spectrogram representation has dimensions $T \times D$, with $T$ being a number of frames in the spectrogram and $D$ being a dimensionality of spectrogram.

In some embodiments, the audio encoder 402 is trained to produce embeddings 404 that represent the audio over a plurality of time frames (e.g., frames 1-5). For example, for each time frame of the plurality of time frames of the audio, the audio encoder produces an embedding that represents the audio for the respective time frame. In some embodiments, the audio encoder detects the phonetic content of the singing voice in the audio of the media item and generates the embeddings to represent the detected phonetic content. In some embodiments, the audio encoder 402 produces a matrix of embeddings that has dimensions $T \times F$, in which $F$ is a dimensionality of the embeddings produced by the audio encoder 402.

In some embodiments, during training, text encoder 412 receives inputs from the lyrics of a respective media item and receives inputs from a lyrics dataset 420 that do not correspond to lyrics of the respective media item (e.g. receives lyrics from a different media content item). For example, lyrics dataset 420 includes text inputs that correspond to lyrics 422 of other media items. Thus, text encoder 412 receives positive tokens L and V (e.g., from the lyrics 422 of the respective media item) and negative tokens Z and C (e.g., from the lyrics dataset 420). In some embodiments, the text encoder 412 outputs a plurality of embeddings that correspond to a series of symbols (e.g., phonemes, characters, syllables, or other text representations) representing the lyrics text of the media item. By receiving positive and negative tokens during training, the system is trained to calculate similarities 406 using contrastive learning.

In some embodiments, the text encoder 412 is trained to use at least one prior symbol and/or at least one following symbol, within the received lyrics, as additional information (e.g., context) for producing the embedding for a current respective symbol. For example, for the lyric "Love," context information from "L" and/or "V" are optionally used when embedding "O" (e.g., the symbol L and/or the symbol V are passed to text encoder 412). In some embodiments, more than one prior and/or more than one following symbol are used as context information. Note that, in the example above, embeddings are generated for individual letters. Generally, however, embeddings will be generated for individual phonemes of the lyrics. In some embodiments, including contextual information (e.g., the additional information) improves the lyrics alignment accuracy. For example, the text encoder is able to more accurately predict how each symbol could sound based on the provided neighboring symbols. For example, "o" in "love" sounds different from the "o" in "cool," which the text encoder is better able to resolve (e.g., and distinguish between the two sounds) having the context information from "L" and/or "V" in the present example.

According to the claimed invention, additional information is also input to text encoder 412 (e.g., during training and/or to the trained text encoder) and/or to audio encoder: a language of the audio item is input to the text encoder 412 and/or the audio encoder 402. In some embodiments (not encompassed by the claimed invention), another characteristic (e.g., additional information related to the audio), such as a genre, a singer, or a style of audio (e.g., audio that is whispered, audio that is shouted, or another style of audio) may be provided to the text encoder 412 and/or the audio encoder 402.

In some embodiments, the text encoder 412 is trained to produce a matrix $\mathbf{T} \in \mathbf{R}^{L \times F}$ of text embeddings $\mathbf{T}$ that has dimensions $L \times F$, wherein $L$ is a number of symbols in the series of symbols and $F$ is a dimensionality of the embeddings produced by text encoder 412. As such, both audio encoder 402 and text encoder 412 produce embeddings with a same dimensionality (e.g., embeddings within the same vector space, also referred to herein as a shared embedding space).

In some embodiments, using the embeddings 404, embeddings 408, and embeddings 410, the system calculates similarities 406 between a respective audio embedding and a respective textual embedding. In some embodiments, during training, the similarities 406 are adjusted using contrastive learning. For example, for each lyrics token embedding (e.g., for positive tokens generated from lyrics 422), its maximum similarity to the audio embeddings is maximized (e.g., the maximum similarity scores, 0.8 for L and 0.9 for V, are increased), while for each negative token, the maximum similarity is minimized (e.g., the maximum similarity scores, 0.4 for Z and 0.5 for C, are decreased). In some embodiments, if the model knows that a given symbol occurs somewhere in the audio (e.g., based on the lyrics text for the audio), the model is enabled to identify its maximum similarity across all evaluated audio frames and further increases the identified maximum similarity value. No special treatment is required for symbols that do not occur in the audio (e.g., similarities with all audio frames can be minimized during training).

In some embodiments, before calculating similarities 406, the system normalizes the embeddings 404 and the embeddings 408 (e.g., and, during training, the embeddings 410). For example, the embeddings from the text encoder and the audio encoder are L2 normalized (or normalized using another method) to enable cosine similarity comparisons to calculate the similarities 406.

In some embodiments, the trained audio encoder 402 and the trained text encoder 412 are used to calculate similarities for additional audio content items (e.g., using lyrics 422 as an input to the text encoder for the respective audio content item). For example, for a respective audio item, lyrics 422 for the audio item are input to trained text encoder 412 and the audio is input to trained audio encoder 402.

In some embodiments, the lyrics text (e.g., lyrics 422) and the audio for the respective audio item are aligned based on the similarities calculated from the embeddings (e.g., normalized embeddings) produced by the trained text encoder and the trained audio encoder. In some embodiments, the alignment is based on determining a monotonic path between the text embeddings and the audio embeddings. In some embodiments, the path is subjected to one or more constraints. For example, the path includes a combination of embeddings in which a second word (e.g., or second letter) appears after a first word (e.g., or a first letter).

In some embodiments, to align the lyrics, the system computes a similarity matrix between any two positions in a given audio and text sequence,

$$S = \frac{1}{2}(\mathbf{A} \cdot \mathbf{T}^T + 1)$$ with $S \in [0,1]^{T \times L}$. In some

embodiments, an alignment is decoded from similarity matrix, $S$, by finding the monotonic path with the maximum similarity score for the path (e.g., without necessarily taking the maximum similarity score for each embedding).

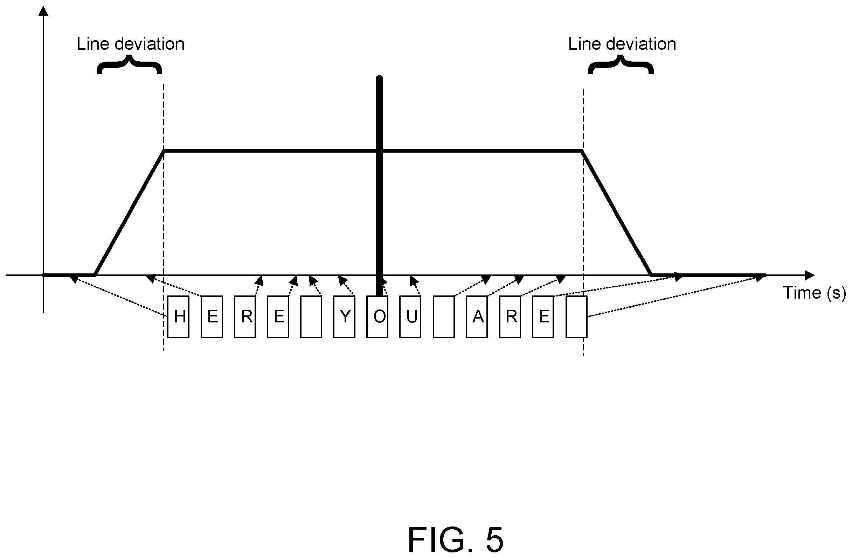

FIG. 5 illustrates a line-mask for a lyrical line, in accordance with some embodiments. In some embodiments, during alignment, the last few symbols and/or words of a lyrical line are output close to the start of a next lyrical line (e.g., and/or vice versa with the beginning symbols and/or words close to the previous lyrical line). As such, the alignment appears to a listener as a mistake if a large amount of time passes between lyrical lines (e.g., during instrumental sections between lines). In some embodiments, to better align the lyrics, the model is constrained to output all words from the same line close to each other.

For example, the initial alignment determined from the similarity matrix S, a line interval is estimated for each lyrical line, with the line interval starting at

$$l_s = l_c - \frac{l_d - d}{2}$$ and the line interval ending at

$$l_e = l_c + \frac{l_d + d}{2}$$, where $l_c$ represents the center of the line (e.g., by taking the estimated start time of its middle token from the initial alignment), and $l_d$ is the duration of the lyrical line (e.g., estimated by multiplying the number of tokens in the line with an estimated duration, d, per token, such as 0.2 s, 0.4 s, or another value).

In some embodiments, based on the estimated line interval, a line-mask $M \in [0,1]^{T \times L}$ is defined for the similarity matrix $S$, where each column of M is constructed as illustrated in FIG. 5 such that each token is constrained to be aligned around its estimated line position. For example, as illustrated in FIG. 5, the lyrical line "Here you Are" is applied to the similarity matrix S during line-based decoding. In some embodiments, each of the characters is mapped to a start time that is estimated in the first decoding. In some embodiments, the initial estimates for the "h" in "here" and the "re" in "are" are moved closer to the other characters in the line by using the line-based decoding.

In some embodiments, the final lyrics alignment is obtained by decoding a masked similarity matrix, $S \circ M$ (the Hadamard product of S and M), to find the monotonic path with the maximum similarity score of the masked similarity matrix.

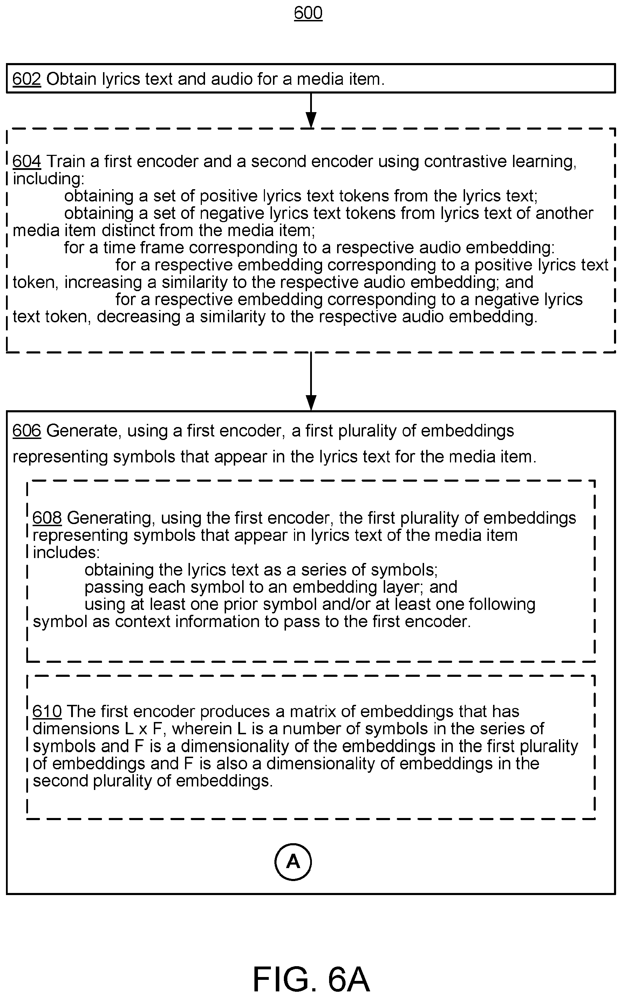

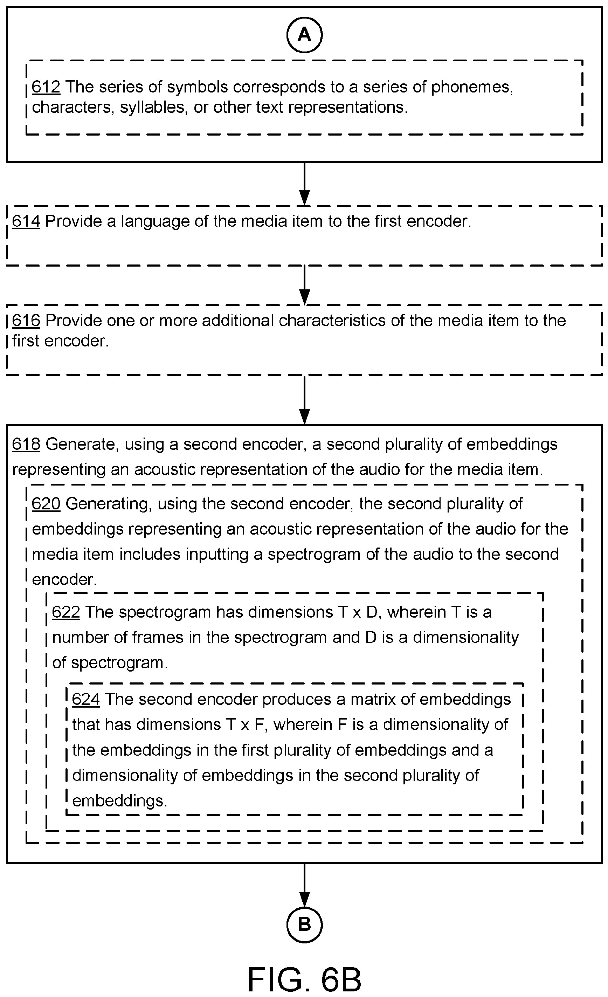

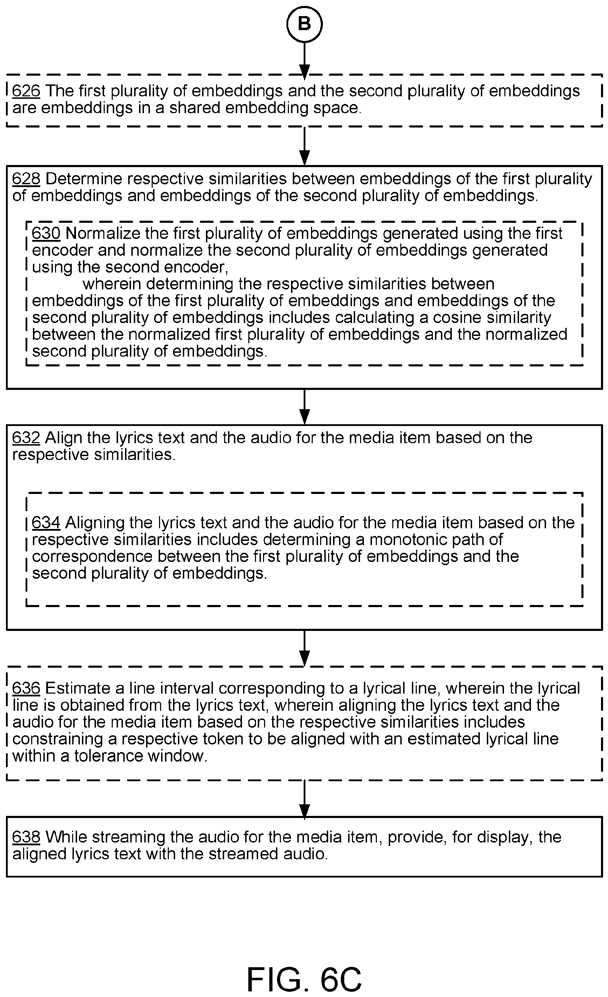

FIGS. 6A-6C are flow diagrams illustrating a method 600 of aligning lyrics text with audio, in accordance with some embodiments. Method 600 may be performed at a computer system (e.g., media content server 104 and/or electronic device(s) 102) having one or more processors and memory storing instructions for execution by the one or more processors. In some embodiments, the method 600 is performed by executing instructions stored in the memory (e.g., memory 212, FIG. 2, memory 306, FIG. 3) of the computer system.

In some embodiments, the method 600 is performed by a combination of the server system (e.g., including media content server 104 and CDN 106) and a client device (e.g., electronic device 102). In some embodiments, the computer system is associated with a media-providing service.

Referring now to FIG. 6A, in performing the method 600, the computer system obtains (602) lyrics text and audio for a media item.

In some embodiments, the computer system trains (604) a first encoder (e.g., text encoder 412) and a second encoder (e.g., audio encoder 402) (e.g., jointly trains the first encoder and the second encoder) using contrastive learning, including: obtaining a set of positive lyrics text tokens from the lyrics text (e.g., wherein the positive lyrics text tokens appear in the lyrical line and/or lyrics of the current training data), obtaining a set of negative lyrics text tokens from lyrics text of another media item distinct from the media item (e.g., wherein the negative lyrics text tokens appear in a training lyrics dataset but do not appear in the lyrics for the lyrical line and/or lyrics of the current training data) for a time frame corresponding to a respective audio embedding: for a respective embedding corresponding to a positive lyrics text token, increasing a similarity to the respective audio embedding (e.g., jointly training the first encoder and the second encoder to generate a higher similarity for the positive lyrics text tokens), and for a respective embedding corresponding to a negative lyrics text token, decreasing a similarity to the respective audio embedding. For example, as described with reference to FIG. 4, in some embodiments, the computer system jointly trains the first encoder and the second encoder to generate a lower similarity for the negative lyrics text tokens (e.g., from lyrics dataset 420) than for the positive lyrics text tokens (e.g., from lyrics 422).

The computer system generates (606), using a first encoder (e.g., text encoder 412), a first plurality of embeddings representing symbols that appear in the lyrics text for the media item.

In some embodiments, generating, using the first encoder, the first plurality of embeddings representing symbols that appear in lyrics text of the media item includes (608): obtaining the lyrics text as a series of symbols, passing each symbol to an embedding layer; and using at least one prior symbol and/or at least one following symbol as context information to pass to the first encoder. In some embodiments, the at least one prior symbol and/or at least one following symbol are within a time threshold of the current symbol (e.g., the current symbol is the center 300 ms of a <1 ms time period and the contextual data is the 300 ms before and 300 ms after time period of the current symbol). In some embodiments, the respective similarities are calculated for each time period (e.g., 900 ms) where a center of the time period corresponds to the current symbol.

In some embodiments, the first encoder produces (610) a matrix of embeddings that has dimensions $L \times F$, wherein $L$ is a number of symbols in the series of symbols and F is a dimensionality of the embeddings in the first plurality of embeddings and a dimensionality of embeddings in the second plurality of embeddings.

According to the claimed invention, the computer system provides (614) a language of the media item to the first encoder and/or to a second encoder (later described). In some embodiments, the language is provided with each letter (or symbol, or lyrical line) input to the first encoder. In some embodiments, the encoders are further trained by inputting the language of the training data with each letter.

In some embodiments (not encompassed by the claimed invention), the computer system may provide (616) (e.g., as inputs) one or more additional characteristics of the media item to the first encoder. In some embodiments, the one or more additional characteristics include a genre, a singer, a style (e.g., whisper, shouting, speaker).

In some embodiments, the series of symbols corresponds (612) to a series of phonemes, characters, syllables, or other text representations. For example, in FIG. 4, text encoder 412 is trained to output the embeddings "L" and "V" (e.g., characters) (e.g., or to output the embeddings "LO", "OV" or "VE," or other consecutive characters of a different length). In some embodiments, instead of individual characters, text encoder 412 outputs consecutive characters (e.g., which optionally do not correspond to semantically coherent units), phonemes, syllables, or words (e.g., a plurality of characters).

The computer system generates (618), using a second encoder, a second plurality of embeddings representing an acoustic representation of the audio for the media item. For example, the second encoder corresponds to audio encoder 402, described with reference to FIG. 4.

In some embodiments, generating, using the second encoder, embeddings representing an acoustic representation of the audio for the media item includes (620) inputting a spectrogram of the audio to the second encoder. For example, the audio encoder 402 receives a spectrogram of the audio of the particular audio item while text encoder 412 receives associated lyrics for the audio item.

In some embodiments, the spectrogram has (622) dimensions $T \times D$, wherein $T$ is a number of frames in the spectrogram and $D$ is a dimensionality of the spectrogram.

In some embodiments, the second encoder produces (624) a matrix of embeddings that has dimensions $T \times F$, wherein $F$ is a dimensionality of the embeddings in the first plurality of embeddings and a dimensionality of embeddings in the second plurality of embeddings. For example, the first plurality of embeddings and the second plurality of embeddings have the same dimensionality (and thus are in the same vector space). For example, audio encoder 402 is trained to output embeddings 404 (FIG. 4), in the same vector space as the text embeddings output by text encoder 412.

In some embodiments, the first plurality of embeddings and the second plurality of embeddings are (626) embeddings in a shared embedding space. For example, the encoders project the audio and lyrics into a shared embedding space such that similarities are high for matching audio and text parts, and low for non-matching audio and text parts (e.g., as described with reference to FIG. 4).

The computer system determines (628) (e.g., calculates) respective similarities between embeddings (e.g., some or all of the embeddings are compared) of the first plurality of embeddings and embeddings of the second plurality of embeddings (e.g., using a similarity model). For example, the similarities 406 described with reference to FIG. 4 are calculated based on the embeddings produced by text encoder 412 compared with the embeddings produced by audio encoder 402.

In some embodiments, the computer system normalizes (630) the first plurality of embeddings generated using the first encoder and normalizing the second plurality of embeddings generated using the second encoder, wherein determining (e.g., calculating) the respective similarities between embeddings of the first plurality of embeddings and embeddings of the second plurality of embeddings includes calculating a cosine similarity between the normalized first plurality of embeddings and the normalized second plurality of embeddings.

The computer system aligns (632) the lyrics text and the audio for the media item based on the respective similarities.

In some embodiments, aligning the lyrics text and the audio for the media item based on the respective similarities includes (634) determining a monotonic path of correspondence between the first plurality of embeddings and the second plurality of embeddings. For example, the monotonic path does not have to follow a maximum similarity score for each time period, but the overall monotonic path is maximized (e.g., the maximum similarity score for a respective time period does not mean that the particular letter/phoneme is selected as the letter/phoneme for the respective time period). For example, the path that generates the maximum similarity across the similarities calculated between the text embeddings and audio embeddings over a first time period is identified.

In some embodiments, the computer system estimates (636) a line interval corresponding to a lyrical line, wherein the lyrical line is obtained from the lyrics text, wherein aligning the lyrics text and the audio for the media item based on the respective similarities includes constraining a respective token to be aligned with an estimated lyrical line within a tolerance window (e.g., as described with reference to FIG. 5). In some embodiments, one lyrical line is input to the audio encoder during training at a time.

The computer system, while streaming the audio for the media item, provides (638), for display, the aligned lyrics text with the streamed audio. For example, in some embodiments, the aligned lyrics are displayed while playing back the audio such that a user is enabled to view the lyrics as the audio corresponding to respective lyrics is played back. For example, server 104 transmits data representative of the lyrics text to be displayed at electronic device 102 and/or electronic device 102 provides (e.g., displays) the aligned lyrics text. As such, depending on whether the server 104 and/or electronic device 102 aligns the lyrics text, the aligned lyrics text is provided (e.g., streamed, transmitted, and/or displayed) in a corresponding manner. In some embodiments, the aligned lyrics are displayed in a karaoke user interface such that the user is enabled to follow (e.g., or sing) along with the lyrics (e.g., in real time) as the media item is played back. In some embodiments, the lyrics are displayed and optionally portions of the lyrics are highlighted in the karaoke user interface as the user follows and/or sings along. In some embodiments, the aligned lyrics are aligned with a previously recorded performance (e.g., a user-recorded performance) such that the lyrics are aligned (e.g., and updated over time) in accordance with the recorded performance. For example, the recorded performance includes a video that has aligned lyrics with the user's singing performance that the user is enabled to watch and/or share.

Although FIGS. 6A-6C illustrate a number of logical stages in a particular order, stages which are not order dependent may be reordered and other stages may be combined or broken out. Some reordering or other groupings not specifically mentioned will be apparent to those of ordinary skill in the art, so the ordering and groupings presented herein are not exhaustive. Moreover, it should be recognized that the stages could be implemented in hardware, firmware, software, or any combination thereof.

The foregoing description, for purpose of explanation, has been described with reference to specific embodiments. However, the illustrative discussions above are not intended to be exhaustive or to limit the embodiments to the precise forms disclosed. Many modifications and variations are possible within the ambit of the claims. The embodiments were chosen and described in order to best explain the principles and their practical applications, to thereby enable others skilled in the art to best utilize the embodiments and various embodiments with various modifications as are suited to the particular use contemplated.

**Claims**

1.  A method (600), comprising:

    obtaining (602) lyrics (422) text and audio for a media item;
    generating (606), using a first encoder (412), a first plurality of embeddings (408) representing symbols that appear in the lyrics text for the media item;

generating (618), using a second encoder (402), a second plurality of embeddings (404) representing an acoustic representation of the audio for the media item;

determining (628) respective similarities (406) between embeddings of the first plurality of embeddings (408) and embeddings of the second plurality of embeddings (404);

aligning (632) the lyrics text and the audio for the media item based on the respective similarities (406); and

while streaming the audio for the media item, providing (638), for display, the aligned lyrics text with the streamed audio;

wherein the method includes providing (614) a language of the media item to the first encoder (412) and/or to the second encoder (402).

2. The method of claim 1, wherein aligning (632) the lyrics text and the audio for the media item based on the respective similarities (406) includes determining (634) a monotonic path of correspondence between the first plurality of embeddings (408) and the second plurality of embeddings (404).

3. The method of claim 1 or 2, wherein generating (618), using the second encoder (402), comprises generating (620) the second plurality of embeddings (404) representing an acoustic representation of the audio for the media item includes inputting (620) a spectrogram of the audio to the second encoder.

4. The method of claim 3, wherein the spectrogram has (622) dimensions $T \times D,$ wherein $T$ is a number of frames in the spectrogram and $D$ is a dimensionality of the spectrogram.

5. The method of claim 4, wherein the second encoder (402) produces (624) a matrix of embeddings (404) that has dimensions $T \times F$, wherein $F$ is a dimensionality of the embeddings in the first plurality of embeddings (408) and $F$ is also a dimensionality of embeddings in the second plurality of embeddings (404).

6. The method of any preceding claim, wherein generating (606), using the first encoder (412), the first plurality of embeddings (408) representing symbols that appear in lyrics (422) text of the media item includes (608):

obtaining the lyrics text as a series of symbols, e.g. corresponding to a series of phonemes, characters, syllables, or other text representations;

passing each symbol to an embedding layer;

and

using at least one prior symbol and/or at least one following symbol as context information to pass to the first encoder (412).

7. The method of claim 6, wherein the first encoder (412) produces (610) a matrix of embeddings (408) that has dimensions $L \times F$, wherein $L$ is a number of symbols in the series of symbols and $F$ is a dimensionality of the embeddings in the first plurality of embeddings (408) and a dimensionality of embeddings in the second plurality of embeddings (404).

8. The method of any preceding claim, including providing (616) one or more additional characteristics of the media item to the first encoder (412) and/or to the second encoder (402).

9. The method of any preceding claim, further comprising, normalizing (630) the first plurality of embeddings (408) generated using the first encoder (412) and normalizing (630) the second plurality of embeddings (404) generated using the second encoder (402),

wherein determining (628) the respective similarities (406) between embeddings of the first plurality of embeddings (408) and embeddings of the second plurality of embeddings (404) includes calculating (630) a cosine similarity between the normalized first plurality of embeddings and the normalized second plurality of embeddings.

10. The method of any preceding claim, wherein the first plurality of embeddings (408) and the second plurality of embeddings (404) are embeddings in a shared embedding space.

11. The method of any preceding claim, further comprising, training (604) the first encoder (412) and the second encoder (402) using contrastive learning, including:

obtaining a set of positive lyrics text tokens from the lyrics (422) text;

obtaining a set of negative lyrics text tokens from lyrics (420) text of another media item distinct from the media item;

for a time frame corresponding to a respective audio embedding (404):

for a respective embedding (408) corresponding to a positive lyrics text token, increasing a similarity (406) to the respective audio embedding; and

for a respective embedding (410) corresponding to a negative lyrics text token, decreasing a similarity (406) to the respective audio embedding.

**12.** The method of any preceding claim, further comprising, estimating (636) a line interval corresponding to a lyrical line, wherein the lyrical line is obtained from the lyrics (422) text, wherein aligning the lyrics text and the audio for the media item based on the respective similarities (406) includes constraining a respective token to be aligned with an estimated lyrical line within a tolerance window.

**13.** A computer system (102/104), comprising:

one or more processors (202/302); and
memory (212/306) storing one or more programs (222/314), the one or more programs including instructions for:

obtaining lyrics (422) text and audio for a media item;
generating, using a first encoder (412), a first plurality of embeddings (408) representing symbols that appear in the lyrics text for the media item;
generating, using a second encoder (402), a second plurality of embeddings (404) representing an acoustic representation of the audio for the media item;
determining respective similarities (406) between embeddings of the first plurality of embeddings and embeddings of the second plurality of embeddings;
aligning the lyrics text and the audio for the media item based on the respective similarities; and
while streaming the audio for the media item, providing, for display, the aligned lyrics text with the streamed audio;
wherein the one or more programs also include instructions for providing a language of the media item to the first encoder (412) and/or to the second encoder (402).

**14.** A non-transitory computer-readable storage medium (212/306) storing one or more programs (222/314) for execution by a computer system (102/104) with one or more processors (202/302), the one or more programs comprising instructions for:

obtaining lyrics (422) text and audio for a media item;
generating, using a first encoder (412), a first plurality of embeddings (408) representing symbols that appear in the lyrics text for the media item;
generating, using a second encoder (402), a second plurality of embeddings (404) representing an acoustic representation of the audio for the media item;

determining respective similarities (406) between embeddings of the first plurality of embeddings and embeddings of the second plurality of embeddings;
aligning the lyrics text and the audio for the media item based on the respective similarities; and
while streaming the audio for the media item, providing, for display, the aligned lyrics text with the streamed audio;
wherein the one or more programs also comprises instructions for providing a language of the media item to the first encoder (412) and/or to the second encoder (402).

**Patentansprüche**

**1.** Verfahren (600), das Folgendes umfasst:

Erhalten (602) eines Liedtextes (422) und von Audio für ein Medienelement;
Erzeugen (606) einer ersten Vielzahl von Einbettungen (408), die Symbole repräsentieren, die im Liedtext für das Medienelement erscheinen, unter Verwendung eines ersten Codierers (412);
Erzeugen (618) einer zweiten Vielzahl von Einbettungen (404), die eine akustische Repräsentation des Audios für das Medienelement repräsentieren, unter Verwendung eines zweiten Codierers (402);
Bestimmen (628) von jeweiligen Ähnlichkeiten (406) zwischen Einbettungen der ersten Vielzahl von Einbettungen (408) und Einbettungen der zweiten Vielzahl von Einbettungen (404);
Ausrichten (632) des Liedtextes und des Audios für das Medienelement auf Basis der jeweiligen Ähnlichkeiten (406) und
Bereitstellen (638) des ausgerichteten Liedtextes mit dem gestreamten Audio zur Anzeige, während das Audio für das Medienelement gestreamt wird;
wobei das Verfahren das Bereitstellen (614) einer Sprache des Medienelements für den ersten Codierer (412) und/oder für den zweiten Codierer (402) beinhaltet.

**2.** Verfahren nach Anspruch 1, wobei das Ausrichten (632) des Liedtextes und des Audios für das Medienelement auf Basis der jeweiligen Ähnlichkeiten (406) das Bestimmen (634) eines monotonen Pfades einer Entsprechung zwischen der ersten Vielzahl von Einbettungen (408) und der zweiten Vielzahl von Einbettungen (404) beinhaltet.

**3.** Verfahren nach Anspruch 1 oder 2, wobei das Erzeugen (618) unter Verwendung des zweiten Codierers (402) das Erzeugen (620) der zweiten Vielzahl von Einbettungen (404) umfasst, die eine akustische Repräsentation des Audios für das Medienelement repräsentieren, das Eingeben (620) eines Spektrogramms des Audios in den zweiten Codierer beinhaltet.

4. Verfahren nach Anspruch 3, wobei das Spektrogramm Abmessungen $T \times D$ aufweist (622), wobei $T$ eine Anzahl von Frames im Spektrogramm ist und $D$ eine Dimensionalität des Spektrogramms ist.

5. Verfahren nach Anspruch 4, wobei der zweite Codierer (402) eine Matrix von Einbettungen (404) produziert (624), die Abmessungen $T \times F$ aufweist, wobei $F$ eine Dimensionalität der Einbettungen in der ersten Vielzahl von Einbettungen (408) ist und $F$ auch eine Dimensionalität von Einbettungen in der zweiten Vielzahl von Einbettungen (404) ist.

6. Verfahren nach einem der vorhergehenden Ansprüche, wobei das Erzeugen (606) der ersten Vielzahl von Einbettungen (408), die Symbole repräsentieren, die im Liedtext (422) des Medienelements erscheinen, unter Verwendung des ersten Codierers (412) Folgendes beinhaltet (608):

   Erhalten des Liedtextes als eine Reihe von Symbolen, die z. B. einer Reihe von Phonemen, Zeichen, Silben oder anderen Textrepräsentationen entsprechen;
   Leiten von jedem Symbol zu einer Einbettungsschicht und Verwenden von mindestens einem vorherigen Symbol und/oder mindestens einem folgenden Symbol als Kontextinformationen zum Leiten zum ersten Codierer (412).

7. Verfahren nach Anspruch 6, wobei der erste Codierer (412) eine Matrix von Einbettungen (408) produziert (610), die Abmessungen $L \times F$ aufweist, wobei $L$ eine Anzahl von Symbolen in der Reihe von Symbolen ist und F eine Dimensionalität der Einbettungen in der ersten Vielzahl von Einbettungen (408) und eine Dimensionalität von Einbettungen in der zweiten Vielzahl von Einbettungen (404) ist.

8. Verfahren nach einem der vorhergehenden Ansprüche, das das Bereitstellen (616) von einem oder mehreren zusätzlichen Eigenschaften des Medienelements für den ersten Codierer (412) und/oder den zweiten Codierer (402) beinhaltet.

9. Verfahren nach einem der vorhergehenden Ansprüche, das ferner das Normalisieren (630) der ersten Vielzahl von Einbettungen (408), die unter Verwendung des ersten Codierers (412) erzeugt wurden, und das Normalisieren (630) der zweiten Vielzahl von Einbettungen (404), die unter Verwendung des zweiten Codierers (402) erzeugt wurden, umfasst, wobei das Bestimmen (628) der jeweiligen Ähnlichkeiten (406) zwischen Einbettungen der ersten Vielzahl von Einbettungen (408) und Einbettungen der zweiten Vielzahl von Einbettungen (404) das Berechnen (630) einer Kosinusähnlichkeit zwischen der normalisierten ersten Vielzahl von Einbettungen und der normalisierten zweiten Vielzahl von Einbettungen beinhaltet.

10. Verfahren nach einem der vorhergehenden Ansprüche, wobei die erste Vielzahl von Einbettungen (408) und die zweite Vielzahl von Einbettungen (404) Einbettungen in einem gemeinsam genutzten Einbettungsraum sind.

11. Verfahren nach einem der vorhergehenden Ansprüche, das ferner das Trainieren (604) des ersten Codierers (412) und des zweiten Codierers (402) unter Verwendung eines kontrastiven Lernens umfasst, was Folgendes beinhaltet:

   Erhalten eines Satzes von positiven Liedtexttokens aus dem Liedtext (422);
   Erhalten eines Satzes von negativen Liedtexttokens aus dem Liedtext (420) eines anderen Medienelements, das sich vom Medienelement unterscheidet;
   für einen Zeitframe, der einer jeweiligen Audioeinbettung (404) entspricht:

      Erhöhen einer Ähnlichkeit (406) mit der jeweiligen Audioeinbettung für eine jeweilige Einbettung (408), die einem positiven Liedtexttoken entspricht; und
      Verringern einer Ähnlichkeit (406) mit der jeweiligen Audioeinbettung für eine jeweilige Einbettung (410), die einem negativen Liedtexttoken entspricht.

12. Verfahren nach einem der vorhergehenden Ansprüche, das ferner das Schätzen (636) eines Zeilenintervalls umfasst, das einer Textzeile entspricht, wobei die Textzeile aus dem Liedtext (422) erhalten wird, wobei das Ausrichten des Liedtextes und des Audios für das Medienelement auf Basis der jeweiligen Ähnlichkeiten (406) das Einschränken eines jeweiligen Tokens derart beinhaltet, dass es auf eine geschätzte Textzeile in einem Toleranzfenster ausgerichtet ist.

13. Computersystem (102/104), das Folgendes umfasst:

   einen oder mehrere Prozessoren (202/302) und Speicher (212/306), in dem ein oder mehrere Programme (222/314) gespeichert sind, wobei das eine oder die mehreren Programme Anweisungen für Folgendes beinhalten:

Erhalten eines Liedtextes (422) und von Audio für ein Medienelement;

Erzeugen einer ersten Vielzahl von Einbettungen (408), die Symbole repräsentieren, die im Liedtext für das Medienelement erscheinen, unter Verwendung eines ersten Codierers (412);

Erzeugen einer zweiten Vielzahl von Einbettungen (404), die eine akustische Repräsentation des Audios für das Medienelement repräsentieren, unter Verwendung eines zweiten Codierers (402);

Bestimmen von jeweiligen Ähnlichkeiten (406) zwischen Einbettungen der ersten Vielzahl von Einbettungen und Einbettungen der zweiten Vielzahl von Einbettungen;

Ausrichten des Liedtextes und des Audios für das Medienelement auf Basis der jeweiligen Ähnlichkeiten und

Bereitstellen des ausgerichteten Liedtextes mit dem gestreamten Audio zur Anzeige, während das Audio für das Medienelement gestreamt wird;

wobei das eine oder die mehreren Programme außerdem Anweisungen zum Bereitstellen einer Sprache des Medienelements für den ersten Codierer (412) und/oder den zweiten Codierer (402) beinhalten.

14. Nichttransitorisches computerlesbares Speichermedium (212/306), auf dem ein oder mehrere Programme (222/314) zur Ausführung durch ein Computersystem (102/104) mit einem oder mehreren Prozessoren (202/302) gespeichert sind, wobei das eine oder die mehreren Programme Anweisungen für Folgendes umfassen:

Erhalten eines Liedtextes (422) und von Audio für ein Medienelement;

Erzeugen einer ersten Vielzahl von Einbettungen (408), die Symbole repräsentieren, die im Liedtext für das Medienelement erscheinen, unter Verwendung eines ersten Codierers (412);

Erzeugen einer zweiten Vielzahl von Einbettungen (404), die eine akustische Repräsentation des Audios für das Medienelement repräsentieren, unter Verwendung eines zweiten Codierers (402);

Bestimmen von jeweiligen Ähnlichkeiten (406) zwischen Einbettungen der ersten Vielzahl von Einbettungen und Einbettungen der zweiten Vielzahl von Einbettungen;

Ausrichten des Liedtextes und des Audios für das Medienelement auf Basis der jeweiligen Ähnlichkeiten und

Bereitstellen des ausgerichteten Liedtextes mit dem gestreamten Audio zur Anzeige, während das Audio für das Medienelement gestreamt wird;

wobei das eine oder die mehreren Programme außerdem Anweisungen zum Bereitstellen einer Sprache des Medienelements für den ersten Codierer (412) und/oder den zweiten Codierer (402) umfasst.

## Revendications

1. Procédé (600) comprenant :

l'obtention (602) des paroles (422) et de l'audio d'un élément multimédia ;

la génération (606), à l'aide d'un premier encodeur (412), d'une première pluralité d'inclusions (408) représentant des symboles qui apparaissent dans les paroles de l'élément multimédia ;

la génération (618), à l'aide d'un deuxième encodeur (402), d'une deuxième pluralité d'inclusions (404) représentant une représentation acoustique de l'audio de l'élément multimédia ;

la détermination (628) des similarités respectives (406) entre les inclusions de la première pluralité d'inclusions (408) et les inclusions de la deuxième pluralité d'inclusions (404) ;

l'alignement (632) des paroles et de l'audio de l'élément multimédia en fonction des similarités respectives (406) ; et

pendant la diffusion de l'audio de l'élément multimédia, l'affichage (638) des paroles alignées avec l'audio diffusé ;

dans lequel Procédé consiste à fournir (614) une langue de l'élément multimédia au premier encodeur (412) et/ou au deuxième encodeur (402).

2. Procédé selon la revendication 1, dans lequel l'alignement (632) des paroles et de l'audio de l'élément multimédia, basé sur leurs similarités respectives (406), comprend la détermination (634) d'un chemin de correspondance monotone entre la première pluralité d'inclusions (408) et la deuxième pluralité d'inclusions (404).

3. Procédé selon la revendication 1 ou 2, dans lequel la génération (618), à l'aide du deuxième encodeur (402), comprend la génération (620) de la deuxième pluralité d'inclusions (404) représentant une représentation acoustique de l'audio de l'élément multimédia et comprend la transmission (620) d'un spectrogramme de l'audio au deuxième encodeur.

4. Procédé selon la revendication 3, dans lequel le spectrogramme a (622) des dimensions T x D, dans lequel T est un nombre d'images dans le spectrogramme et D est une dimensionnalité du spectrogramme.

5. Procédé selon la revendication 4, dans lequel le deuxième encodeur (402) produit (624) une matrice d'inclusions (404) de dimensions T x F, dans lequel F est une dimensionnalité des inclusions dans la première pluralité d'inclusions (408) et F est également une dimensionnalité d'inclusions dans la deuxième pluralité d'inclusions (404).

6. Procédé selon une quelconque des revendications précédentes, dans lequel la génération (606), à l'aide du premier encodeur (412), de la première pluralité d'inclusions (408) représentant les symboles qui apparaissent dans les paroles (422) de l'élément multimédia comprend (608) :

   l'obtention des paroles sous forme d'une série de symboles, correspondant par exemple à une série de phonèmes, de caractères, de syllabes ou d'autres représentations textuelles ;
   la transmission de chaque symbole à une couche d'inclusion ; et
   l'utilisation d'au moins un symbole précédent et/ou au moins un symbole suivant comme information contextuelle à transmettre au premier encodeur (412).

7. Procédé selon la revendication 6, dans lequel le premier encodeur (412) produit (610) une matrice d'inclusions (408) de dimensions L x F, dans lequel L est un nombre de symboles dans la série de symboles et F est une dimensionnalité des inclusions dans la première pluralité d'inclusions (408) et une dimensionnalité des inclusions dans la deuxième pluralité d'inclusions (404).

8. Procédé selon une quelconque des revendications précédentes, comprenant la fourniture (616) d'une ou plusieurs caractéristiques supplémentaires de l'élément multimédia au premier encodeur (412) et/ou au deuxième encodeur (402).

9. Procédé selon une quelconque des revendications précédentes, comprenant en outre la normalisation (630) de la première pluralité d'inclusions (408) générées à l'aide du premier encodeur (412) et la normalisation (630) de la deuxième pluralité d'inclusions (404) générées à l'aide du deuxième encodeur (402),
   dans lequel la détermination (628) des similarités respectives (406) entre les inclusions de la première pluralité d'inclusions (408) et les inclusions de la deuxième pluralité d'inclusions (404) comprend le calcul (630) d'une similarité cosinus entre la première pluralité d'inclusions normalisée et la deuxième pluralité d'inclusions normalisée.

10. Procédé selon une quelconque des revendications précédentes, dans lequel la première pluralité d'inclusions (408) et la deuxième pluralité d'inclusions (404) sont des inclusions appartenant à espace d'inclusion partagé.

11. Procédé selon une quelconque des revendications précédentes, comprenant en outre l'entraînement (604) du premier encodeur (412) et du deuxième encodeur (402) en utilisant l'apprentissage contrastif, comprenant :

   l'obtention d'un ensemble de jetons de paroles positifs à partir des paroles (422) ;
   l'obtention d'un ensemble de jetons de paroles négatifs à partir des paroles (420) d'un autre élément multimédia distinct de l'élément multimédia ;
   pour une période correspondant à une inclusion audio respective (404) :

      pour une inclusion respective (408) correspondant à un jeton de paroles positif, l'augmentation d'une similarité (406) avec l'inclusion audio respective; et
      pour une inclusion respective (410) correspondant à un jeton de paroles négatif, la diminution d'une similarité (406) avec l'inclusion audio respective.

12. Procédé selon une quelconque des revendications précédentes, comprenant en outre l'estimation (636) d'un intervalle de ligne correspondant à un vers, dans lequel le vers est obtenu à partir des paroles (422), dans lequel l'alignement des paroles et de l'audio de l'élément multimédia sur la base de leurs similarités respectives (406) inclut la contrainte d'un jeton respectif à être aligné avec un intervalle de ligne estimé dans une plage de tolérance.

13. Système informatique (102/104) comprenant :

   un ou plusieurs processeurs (202/302) ; et
   une mémoire (212/306) mémorisant un ou plusieurs programmes (222/314), le ou les programmes comprenant des instructions pour :

      obtenir les paroles (422) et l'audio d'un élément multimédia ;
      générer, à l'aide d'un premier encodeur (412), une première pluralité d'inclusions (408) représentant les symboles qui apparaissent dans les paroles de l'élément multimédia ;
      générer, à l'aide d'un deuxième encodeur (402), une deuxième pluralité d'inclusions (404) représentant une représentation acoustique de l'audio de l'élément multimédia ;
déterminer les similarités respectives (406) entre les inclusions de la première pluralité d'inclusions et les inclusions de la deuxième pluralité d'inclusions;
aligner les paroles et l'audio de l'élément multimédia sur la base des similarités respectives et
tout en diffusant l'audio de l'élément multimédia, afficher les paroles alignées avec l'audio diffusé ;
dans lequel le ou les programmes comprennent également des instructions permettant de fournir une langue de l'élément multimédia au premier encodeur (412) et/ou au deuxième encodeur (402).

14. Support de mémorisation non transitoire lisible par ordinateur (212/306) mémorisant un ou plusieurs programmes (222/314) destinés à être exécutés par un système informatique (102/104) doté d'un ou plusieurs processeurs (202/302), le ou les programmes comprenant des instructions pour :

obtenir les paroles (422) et l'audio d'un élément multimédia ;
générer, à l'aide d'un premier encodeur (412), une première pluralité d'inclusions (408) représentant les symboles qui apparaissent dans les paroles de l'élément multimédia ;
générer, à l'aide d'un deuxième encodeur (402), une deuxième pluralité d'inclusions (404) représentant une représentation acoustique de l'audio de l'élément multimédia ;
déterminer les similarités respectives (406) entre les inclusions de la première pluralité d'inclusions et les inclusions de la deuxième pluralité d'inclusions;
aligner les paroles et l'audio de l'élément multimédia sur la base des similarités respectives et tout en diffusant l'audio de l'élément multimédia, afficher les paroles alignées avec l'audio diffusé ;
dans lequel le ou les programmes comprennent également des instructions permettant de fournir une langue de l'élément multimédia au premier encodeur (412) et/ou au deuxième encodeur (402).

Media Content
Delivery System
100

Media Content Server 104

Content
Distribution
Network (CDN) 106

Network(s) 112

Electronic Device
102-1

• • •

Electronic Device
102-m

EP 4 362 007 B1

FIG. 1

Electronic Device
102

Memory 212

Operating System 216

Network Communication Module(s) 218

Location
Detection
240

User Interface Module 220

Media Application 222

CPU(s)
202

Lyrics Module 224

Alignment Module 226

214

Content Items 228

204

⋮

User Interface

Web Browser Application 234

Output Device(s) 206

Other Applications 236

Audio Jack 250

⋮

Speaker 252

Input Device(s)
208

Network
Interface(s)

Wireless
260

210

FIG. 2

Media Content
Server 104

Memory 306

| Operating System 310 |
| Network Communication Module 312 |

Server Application Modules 314

| Media Content Module 316 |
| Encoder Training Module 318 |
| Encoders 320 |
| Alignment Module 322 |
| ⋮ |

Server Data Modules 330

| Lyrics Database 331 |
| Media Content Database 332 |
| Metadata Database 334 |
| ⋮ |

⋮

CPU(s)
302

308

Network
Interface(s)

304

# FIG. 3

FIG. 4

FIG. 5

600

602 Obtain lyrics text and audio for a media item.

604 Train a first encoder and a second encoder using contrastive learning, including:
  obtaining a set of positive lyrics text tokens from the lyrics text;
  obtaining a set of negative lyrics text tokens from lyrics text of another media item distinct from the media item;
  for a time frame corresponding to a respective audio embedding:
    for a respective embedding corresponding to a positive lyrics text token, increasing a similarity to the respective audio embedding; and
    for a respective embedding corresponding to a negative lyrics text token, decreasing a similarity to the respective audio embedding.

606 Generate, using a first encoder, a first plurality of embeddings representing symbols that appear in the lyrics text for the media item.

608 Generating, using the first encoder, the first plurality of embeddings representing symbols that appear in lyrics text of the media item includes:
  obtaining the lyrics text as a series of symbols;
  passing each symbol to an embedding layer; and
  using at least one prior symbol and/or at least one following symbol as context information to pass to the first encoder.

610 The first encoder produces a matrix of embeddings that has dimensions L x F, wherein L is a number of symbols in the series of symbols and F is a dimensionality of the embeddings in the first plurality of embeddings and F is also a dimensionality of embeddings in the second plurality of embeddings.

(A)

FIG. 6A

(A)

612 The series of symbols corresponds to a series of phonemes, characters, syllables, or other text representations.

614 Provide a language of the media item to the first encoder.

616 Provide one or more additional characteristics of the media item to the first encoder.

618 Generate, using a second encoder, a second plurality of embeddings representing an acoustic representation of the audio for the media item.

620 Generating, using the second encoder, the second plurality of embeddings representing an acoustic representation of the audio for the media item includes inputting a spectrogram of the audio to the second encoder.

622 The spectrogram has dimensions T x D, wherein T is a number of frames in the spectrogram and D is a dimensionality of spectrogram.

624 The second encoder produces a matrix of embeddings that has dimensions T x F, wherein F is a dimensionality of the embeddings in the first plurality of embeddings and a dimensionality of embeddings in the second plurality of embeddings.

(B)

FIG. 6B

B

626 The first plurality of embeddings and the second plurality of embeddings are embeddings in a shared embedding space.

628 Determine respective similarities between embeddings of the first plurality of embeddings and embeddings of the second plurality of embeddings.

630 Normalize the first plurality of embeddings generated using the first encoder and normalize the second plurality of embeddings generated using the second encoder,
    wherein determining the respective similarities between embeddings of the first plurality of embeddings and embeddings of the second plurality of embeddings includes calculating a cosine similarity between the normalized first plurality of embeddings and the normalized second plurality of embeddings.

632 Align the lyrics text and the audio for the media item based on the respective similarities.

634 Aligning the lyrics text and the audio for the media item based on the respective similarities includes determining a monotonic path of correspondence between the first plurality of embeddings and the second plurality of embeddings.

636 Estimate a line interval corresponding to a lyrical line, wherein the lyrical line is obtained from the lyrics text, wherein aligning the lyrics text and the audio for the media item based on the respective similarities includes constraining a respective token to be aligned with an estimated lyrical line within a tolerance window.

638 While streaming the audio for the media item, provide, for display, the aligned lyrics text with the streamed audio.

FIG. 6C

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008097754 A1